# FASCICULE DE BREVET EUROPEEN

(11) **EP 3 519 256 B1**
(45) Date de publication et mention de la délivrance du brevet: **24.11.2021**
(21) Numéro de dépôt: 17761227.2
(22) Date de dépôt: 28.08.2017
(51) Int. Cl.: B60S 1/08

(54) **PROCÉDÉ DE SUIVI DE L'ÉVOLUTION DE L'ÉTAT D'USURE D'UN BALAI D'ESSUIE-GLACE**
VERFAHREN ZUR ÜBERWACHUNG DER ENTWICKLUNG DES VERSCHLEISSES EINES WISCHERBLATTES
METHOD FOR SUPERVISING THE EVOLUTION OF THE WEAR OF A WINDSCREEN WIPER BLADE

(30) Priorité: 28.09.2016 FR 1659190
(43) Date de publication de la demande: 07.08.2019
(73) Titulaire: Valeo Systèmes d'Essuyage, 78322 Le Mesnil Saint Denis (FR)
(72) Inventeur: BILLIAUWS, Stijn, 93285 Saint Denis Cedex (FR); COQUET, Damien, 93285 Saint Denis Cedex (FR); JOMARD, Olivier, 63500 Issoire (FR); POTON, Eric, 63500 Issoire (FR)
(74) Mandataire: Valeo Visibility
(86) Numéro de dépôt international: PCT/EP2017/071527
(87) Numéro de publication internationale: WO 2018/059849

(56) Documents cités:
- EP-A1- 1 103 435
- EP-A2- 2 243 671
- EP-A2- 2 253 520
- WO-A1-03/101797

## Description

### DOMAINE TECHNIQUE DE L'INVENTION

L'invention concerne un procédé de suivi de l'évolution de l'état d'usure d'un balai d'essuie-glace, notamment en vue de procéder en temps utile à son remplacement par un balai d'essuie-glace neuf, et un système d'essuyage apte à la mise en œuvre d'un tel procédé.

### ARRIERE PLAN TECHNIQUE DE L'INVENTION

Un système d'essuyage d'une vitre telle qu'un pare-brise de véhicule comprend notamment au moins un balai d'essuie-glace porté par un porte-balai et un moteur d'entraînement du porte-balai de façon que le balai d'essuie-glace soit entraîné par le porte-balai en essuyage alterné du pare-brise, par exemple selon un mouvement de rotation cyclique, sensiblement en arc de cercle, autour d'un axe de rotation.

Pour pouvoir procéder à différentes opérations de maintenance des balais d'essuie-glace, le porte-balai est déplaçable, en général manuellement, depuis une position d'usage ou d'utilisation, dite « position de service », dans laquelle une lame d'essuyage du balai d'essuie-glace qu'il porte est en contact avec la surface extérieure du pare-brise et est apte à être entraînée par le porte-balai pour essuyer et/ou nettoyer le pare-brise, jusqu'à une position dite « position de maintenance » dans laquelle le balai d'essuie-glace n'est pas en contact avec le pare-brise, après avoir été relevé de cette vitre, notamment par un utilisateur.

Le porte-balai peut être mis dans sa position de maintenance par exemple pour nettoyer le balai d'essuie-glace, le remplacer en cas d'usure ou le protéger du givre formé sur le pare-brise en hiver.

On connait aussi un type de système d'essuyage dans lequel le porte-balai est dans une position dite de rangement, par exemple sous le capot du véhicule, lorsque le système est inactif.

Dans cette position de rangement, le porte-balai n'est pas accessible et il ne peut pas être amené directement depuis cette position de rangement jusqu'à une position de maintenance.

Une commande spécifique du système, depuis l'habitacle du véhicule, permet de déplacer le porte-balai de sa position de rangement jusqu'à une position intermédiaire dans laquelle il est accessible et le balai d'essuie-glace qu'il porte est en appui sur le pare-brise, comme dans une position de service évoquée précédemment. Le porte-balai peut alors être déplacé manuellement depuis cette position intermédiaire jusqu'à une position de maintenance dans laquelle le balai d'essuie-glace n'est plus en contact avec le pare-brise.

Afin de garantir la plus grande sécurité d'utilisation du véhicule et notamment les meilleures conditions de visibilité à travers la vitre, par exemple à travers le pare-brise, il est nécessaire que chaque balai d'essuie-glace soit remplacé par un nouveau balai d'essuie-glace neuf lorsque l'état d'usure du balai atteint un certain seuil qui, pour un balai d'essuyage neuf, correspond par exemple à un nombre de cycles de balayage.

Il est relativement simple de noter la date de changement des balais d'essuie-glace, puis, à partir d'une période d'installation préconisée par le fabricant, de procéder à leur remplacement par un jeu de balais d'essuie-glace neufs, à l'expiration de cette durée. Toutefois une telle solution n'est pas satisfaisante car elle ne correspond pas à une connaissance réelle de l'état d'usure effectif du balai d'essuie-glace, et notamment de sa lame d'essuyage.

A cet effet, l'invention vise notamment à proposer un procédé permettant, de manière plus fiable, de déterminer l'état d'usure en balayage d'un balai d'essuie-glace.

La demanderesse a déjà proposé dans la demande WO-A1-2013/159943 un procédé d'estimation de l'état d'usure d'un balai d'essuie-glace à partir d'un coefficient de friction du balai sur la vitre d'un véhicule. Le coefficient de friction est calculé sur une vitre sèche et sa valeur est comparée à une valeur seuil pour déterminer l'état d'usure du balai.

Cependant, l'efficacité de cette méthode dépend de facteurs environnementaux. En effet, dans le cas où le véhicule ne serait utilisé que sous la pluie, la méthode précitée ne permettrait pas de mesurer l'état d'usure du balai d'essuie-glace de manière fiable. En effet, un balai d'essuie-glace utilisé sur une surface vitrée mouillée présentera un coefficient de friction inférieur par rapport au coefficient de friction de ce même balai utilisé sur une surface vitrée sèche.

Par ailleurs, une estimation de l'état d'usure du balai d'essuie-glace à partir d'un unique calcul du coefficient de friction n'est bien souvent pas représentative de l'état d'usure réel du balai d'essuie-glace. Par exemple, un balai d'essuie-glace dont la lame en caoutchouc est froide, notamment en raison de la température extérieure à laquelle est soumise le balai et/ou du fait que lame d'essuyage n'a pas été utilisée à de nombreuses reprises dans les instants qui précèdent l'estimation, présentera un coefficient de friction plus élevé que ce même balai s'il présentait une lame en caoutchouc plus chaude.

Il existe donc un besoin d'un procédé permettant de manière fiable et indépendamment de facteurs environnementaux, de déterminer l'état d'usure en balayage d'un balai d'essuie-glace.

Le document EP 2 243 671 A2 montre un procédé de suivi de l'évolution de l'état d'usure d'un balai d'essuie-glace selon le préambule de la première revendication.

### BREF RESUME DE L'INVENTION

L'invention propose un procédé de suivi de l'évolution de l'état d'usure d'un balai d'essuie-glace d'un système d'essuyage d'une vitre de véhicule automobile, en vue de procéder au remplacement de ce balai d'essuie-glace au-delà d'un seuil déterminé d'usure. Le procédé comporte successivement :
- une étape a) de détermination du remplacement du balai d'essuie-glace par un nouveau balai d'essuie-glace ;
- une étape b) d'estimation ou de mesure de l'état d'usure du nouveau balai d'essuie-glace à un instant t0 ;
- une étape c) de suivi de l'évolution au cours du temps de l'état d'usure du nouveau balai d'essuie-glace à partir de l'instant t0 ; et
- une étape d) de détection lorsque l'état d'usure du nouveau balai d'essuie-glace atteint ou dépasse ledit seuil,
l'étape a) de détermination du remplacement du balai d'essuie-glace par un nouveau balai d'essuie-glace est une étape d'émission d'un message d'interrogation à destination d'un utilisateur du véhicule et/ou d'une personne chargée de la maintenance du balai d'essuie-glace, ledit message étant un message demandant à l'utilisateur du véhicule et/ou à la personne chargée de la maintenance du balai d'essuie-glace s'il a procédé au remplacement du balai d'essuie-glace par un nouveau balai d'essuie-glace neuf.

Le procédé selon l'invention peut comprendre une ou plusieurs des caractéristiques ou étapes suivantes, prises isolément les unes des autres ou en combinaison les unes avec les autres :
- l'étape d) est suivie d'une étape e) d'émission d'un signal d'avertissement en particulier à destination d'un utilisateur du véhicule et/ou d'une personne chargée de la maintenance du balai d'essuie-glace ;
- ledit signal d'avertissement est un signal d'information en vue du remplacement du nouveau balai d'essuie-glace usagé par un autre nouveau balai ;
- ledit système comporte au moins un moteur d'entraînement en balayage alterné d'un support du balai d'essuie-glace, l'étape b) étant une étape de mesure de la consommation de puissance ou du couple de sortie dudit au moins un moteur en fonctionnement ;
- l'étape b) est une étape de mesure du couple de frottement du balai d'essuie-glace sur la vitre ou du coefficient de friction du balai d'essuie-glace sur la vitre ;
- l'étape c) comprend successivement :
   o une sous étape i) d'enregistrement d'un paramètre représentatif de l'état d'usure du nouveau balai d'essuie-glace à l'instant t0, mesuré à l'étape b) ; et
   ∘ une sous étape ii) de mesure ou de calcul et d'enregistrement dudit paramètre à un instant t, postérieur à t0, cette sous étape ii) étant répétée plusieurs fois ;
- ladite sous étape ii) intervient à chaque cycle de balayage de la vitre par ledit balai d'essuie-glace ;
- ledit paramètre est calculé à la sous étape ii) en calculant la moyenne de plusieurs mesures du paramètre réalisées pendant le cycle de balayage ;
- les mesures du paramètre utilisées pour le calcul de la moyenne excluent certaines mesures réalisées au début et à la fin du cycle de fonctionnement.

L'invention propose aussi un système d'essuyage d'une vitre de véhicule automobile comportant :
- au moins un balai d'essuie-glace ;
- au moins un moteur d'entraînement en balayage alterné d'un support du balai ;
- des moyens de détermination du remplacement du balai d'essuie-glace par un nouveau balai d'essuie-glace ;
- des moyens d'estimation ou de mesure de l'état d'usure du nouveau balai d'essuie-glace à un instant t0 ;
- des moyens de suivi de l'évolution au cours du temps de l'état d'usure du nouveau balai d'essuie-glace à partir du temps t0 ; et
- des moyens de détection lorsque l'état d'usure du nouveau balai d'essuie-glace atteint ou dépasse ledit seuil, ledit système étant configuré pour mettre en œuvre le procédé décrit cidessus.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique d'un système d'essuyage d'un pare-brise de véhicule dont les balais d'essuie-glace sont représentés dans leur position dite de service ;
- la figure 2 est une vue analogue à celle de la figure 1, dans laquelle les balais d'essuie-glace sont représentés dans leur position dite de maintenance ;
- la figure 3 est un ordinogramme d'un procédé de suivi de l'évolution de l'état d'usure d'un balai d'essuie-glace du système d'essuyage illustré aux figures 1 et 2, en vue de procéder au remplacement de ce balai d'essuie-glace au-delà d'un seuil déterminé d'usure ; et
- la figure 4 est un graphe illustrant un mode de réalisation du suivi de l'évolution au cours du temps de l'état d'usure d'un balai d'essuie-glace.

### DESCRIPTION DETAILLEE DES FIGURES

Dans la suite de la description, des éléments et composants présentant une structure identique ou des fonctions analogues seront désignés par des mêmes références.

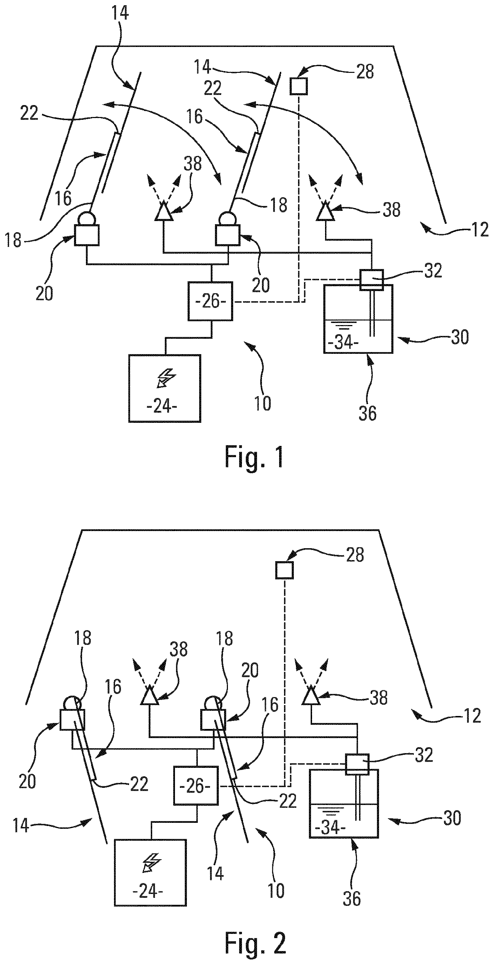

On a représenté sur les figures 1 et 2, un système 10 d'essuyage d'une vitre 12 d'un véhicule automobile, qui est ici un pare-brise du véhicule.

Le système d'essuyage 10 comprend ici deux balais d'essuie-glace 14. Chaque balai d'essuie-glace 14 est porté par un porte-balai 16 aussi appelé couramment bras d'essuie-glace ou bras d'entraînement.

Selon une réalisation de l'invention, non représentée en détail, chaque balai d'essuie-glace 14 comporte au moins une lame d'essuyage qui est une lame souple en matériau élastomère, naturel ou synthétique, dont un bord inférieur d'orientation longitudinale selon la direction générale longitudinale du balai d'essuie-glace 14, coopère avec la surface extérieure du pare-brise 12 pour en assurer le nettoyage et/ou l'essuyage.

Une extrémité proximale 18 de chaque porte-balai 16 est reliée à un moteur d'entraînement 20, tandis qu'une extrémité distale 22 de chaque porte-balai 16 est reliée au balai d'essuie-glace 14 qu'il porte.

Chaque moteur d'entraînement 20 est conçu pour entraîner le porte-balai 16 en balayage dans un mouvement de pivotement alterné, ou mouvement de rotation cyclique, selon une portion d'arc de cercle, autour d'un axe de pivotement ou de rotation dont l'orientation générale est globalement orthogonale à l'orientation générale longitudinale du porte-balai 16.

Selon une réalisation de l'invention, chaque moteur d'entraînement 20 comporte un arbre de sortie, non représenté, qui transmet au porte-balai 16 associé, un couple d'entraînement, directement ou par exemple par l'intermédiaire d'une tringlerie.

Chaque moteur d'entraînement 20 est par exemple un moteur électrique et les moteurs d'entraînement 20 sont reliés à une source 24 de puissance électrique, tels que par exemple une batterie d'accumulateurs du véhicule, ou un alternateur.

Chaque moteur d'entrainement 20 est par exemple relié à la source 24 de puissance électrique par l'intermédiaire d'une unité 26 de pilotage et de contrôle du système d'essuyage 10.

L'unité 26 de pilotage et de contrôle est notamment conçue et configurée pour gérer le fonctionnement du système d'essuyage 10 selon plusieurs programmes prédéfinis d'utilisation, par exemple en contrôlant la vitesse d'entraînement en rotation des porte-balai 16 par régulation du courant fourni aux moteurs d'entraînement 20, pour une valeur donnée de la tension d'alimentation des moteurs d'entraînement 20 fournie par la source de puissance électrique 24.

Plus précisément, l'unité 26 de pilotage et de contrôle comprend par exemple une interface d'entrée, une mémoire de données, une mémoire de programmes, un calculateur, une interface de sortie et au moins un bus de communication par l'intermédiaire duquel les interfaces d'entrée et de sortie, les mémoires de données et de programmes et le calculateur communiquent entre eux.

L'unité 26 de pilotage et de contrôle est par exemple configurée pour mettre en œuvre un procédé 100 de suivi de l'évolution de l'état d'usure d'un balai d'essuie-glace 14 du système 10 d'essuyage, en vue de procéder au remplacement de ce balai d'essuie-glace au-delà d'un seuil S déterminé d'usure. Un exemple de procédé 100 est décrit plus en détail ci-après.

Les interfaces d'entrée et/ou de sortie sont par exemple reliées à une interface utilisateur ménagée dans l'habitacle de l'utilisateur. L'interface utilisateur peut par exemple comprendre un écran tactile.

L'interface d'entrée peut en outre être reliée à des moyens configurés pour mesurer l'état d'usure du nouveau balai d'essuie-glace 14, notamment pour mesurer un paramètre représentatif de l'état d'usure dudit nouveau balai d'essuie-glace 14. Les moyens sont par exemple configurés pour mesurer la consommation de puissance ou le couple de sortie d'au moins un moteur 20 en fonctionnement. En variante, Les moyens sont par exemple configurés pour mesurer le couple de frottement du balai d'essuie-glace 14 sur la vitre 12 ou le coefficient de friction du balai d'essuie-glace 14 sur la vitre 12. De tels moyens sont bien connus de l'homme du métier.

A titre complémentaire et non limitatif, le système d'essuyage 10 comprend encore un capteur 28 de pluie qui est relié à l'unité de pilotage et de contrôle 26, notamment via l'interface d'entrée.

Le système d'essuyage 10 comprend encore un dispositif 30 de nettoyage de la surface extérieure du pare-brise, qui comporte une pompe 32 qui est reliée à l'unité de pilotage et de contrôle 26, notamment via l'interface de sortie, et à la source de puissance électrique 24, et qui est conçue pour prélever du liquide de lave-glace 34 dans un réservoir 36 pour l'acheminer jusqu'à des moyens, de projection du liquide sur la surface extérieure du pare-brise 12, ces moyens de projection étant par exemple des buses 38 agencées sur le capot du véhicule automobile ou bien portées par les balais d'essuie-glace 14 ou bien par les porte-balai 16.

Selon une réalisation possible de l'invention, chaque porte-balai 16 est susceptible d'occuper une position dite de service ou position d'usage en balayage, dans laquelle le bord essuyage de la lame d'essuyage du balai d'essuie-glace est en contact avec la surface extérieure de la vitre essuyée, notamment du pare-brise (figure 1).

Dans la position de service de chaque porte-balai 16, ils peuvent être entraînés en balayage cyclique alterné par les moteurs d'entraînement 20.

Chaque porte-balai 16 est aussi susceptible d'occuper, comme illustré schématiquement à la figure 2, une position dite de maintenance dans laquelle le porte-balai 16, et donc le balai d'essuie-glace 14 qu'il porte, est éloigné de la vitre, c'est-à-dire que la lame d'essuyage n'est plus en contact avec la surface extérieure du pare-brise.

Le changement de position de chaque porte-balai 16 entre sa position d'usage et sa position de maintenance peut par exemple être effectué manuellement par un utilisateur ou un opérateur, par basculement du porte-balai 16 autour d'un axe généralement globalement orthogonal à l'axe longitudinal du porte-balai 16.

Le déplacement du porte-balai 16 peut aussi être « motorisé » et commandé à partir de l'habitacle du véhicule, comme évoqué dans le préambule, notamment jusqu'à une position intermédiaire.

Lorsqu'un porte-balai 16 est dans sa position de maintenance telle qu'illustré à la figure 2, il est possible d'accéder notamment au balai d'essuie-glace 14 afin de procéder à une opération d'entretien, telle que par exemple un nettoyage de la lame d'essuyage.

Plus généralement, la mise en position de maintenance d'un porte-balai 16 et de son bras d'essuie-glace 14 associé, a pour but de permettre de procéder à une opération de remplacement du balai d'essuie-glace ou de la lame d'essuyage.

Une telle opération de remplacement s'effectue en démontant le balai d'essuie-glace usagé ou endommagé, puis en montant sur le porte-balai 16 un nouveau balai d'essuie-glace neuf ou une nouvelle lame d'essuyage.

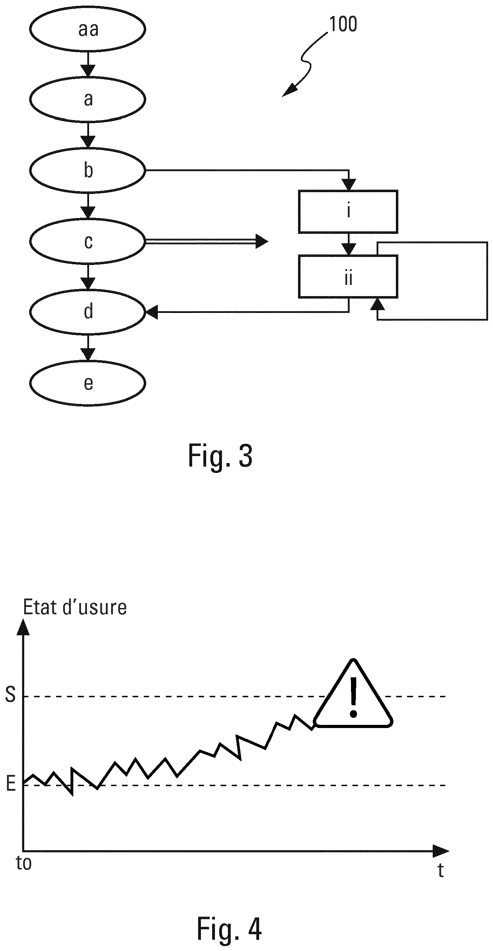

La figure 3 montre un exemple de procédé 100 de suivi de l'évolution de l'état d'usure d'un balai d'essuie-glace 14 du système 10 d'essuyage, en vue de procéder au remplacement de ce balai d'essuie-glace au-delà d'un seuil S déterminé d'usure. Le procédé 100 est par exemple enregistré dans la mémoire de programmes de l'unité 26 de pilotage et de contrôle. Le seuil S est par exemple préenregistré dans la mémoire de données de l'unité 26 de pilotage et de contrôle.

Le procédé 100 comprend successivement :
- une étape a) de détermination du remplacement du balai d'essuie-glace par un nouveau balai d'essuie-glace 14 ;
- une étape b) d'estimation ou de mesure de l'état d'usure du nouveau balai d'essuie-glace 14 à un instant t0 ;
- une étape c) de suivi de l'évolution au cours du temps de l'état d'usure du nouveau balai d'essuie-glace 14 à partir de l'instant t0 ; et
- une étape d) de détection lorsque l'état d'usure du nouveau balai d'essuie-glace 14 atteint ou dépasse ledit seuil S.

De cette manière, le procédé 100 permet, via le suivi de l'évolution au cours du temps de l'état d'usure du nouveau balai d'essuie-glace 14, de détecter lorsque le nouveau balai d'essuie-glace 14 nécessite d'être lui-même remplacé.

Le procédé 100 est donc plus fiable car il ne se fonde pas sur une mesure ponctuel pour déterminer si le nouveau balai d'essuie-glace 14 est trop usé ou non. Au contraire, on s'attache ici à regarder l'évolution au cours du temps de l'état d'usure du balai d'essuie-glace 14, de sorte qu'il est possible d'extraire de cette évolution une tendance globale et de repérer d'éventuelles erreurs de mesure. Pour cette même raison, le procédé 100 est indépendant des facteurs environnementaux.

Cela est particulièrement visible à la figure 4. Ce graphique montre l'évolution au cours du temps de l'état d'usure du balai d'essuie-glace 14. Il est aussi représenté sur cette figure 4 l'état d'usure E du nouveau balai d'essuie-glace 14, lors du remplacement du balai d'essuie-glace usé. On s'aperçoit que l'état d'usure du nouveau balai d'essuie-glace 14 évolue au cours du temps en dents de scie, l'état d'usure mesuré pouvant en effet varier en fonction par exemple des intempéries (pluies plus ou moins fortes) ou de la chaleur. Ainsi, en suivant l'évolution au cours du temps de l'état d'usure du nouveau balai d'essuie-glace 14, il est possible de s'affranchir de cet aspect en dents de scie et donc de l'impact des facteurs environnementaux sur les mesures d'état d'usure, pour ne dégager du graphique que la tendance globale d'augmentation de l'état d'usure dudit nouveau balai d'essuie-glace 14. Cela permet en outre de repérer très facilement une mesure ou une estimation ponctuelle défectueuse.

L'étape a) de détermination du remplacement du balai d'essuie-glace par un nouveau balai d'essuie-glace 14 est par exemple une étape d'émission d'un message d'interrogation à destination d'un utilisateur du véhicule et/ou d'une personne chargée de la maintenance du balai d'essuie-glace.

En particulier, le message d'interrogation peut être un message demandant à l'utilisateur du véhicule et/ou à la personne chargée de la maintenance du balai d'essuie-glace s'il a procédé au remplacement du balai d'essuie-glace par un nouveau balai d'essuie-glace neuf.

Pour cela, le message peut par exemple être adressé par affichage sur l'interface utilisateur. Le message peut aussi être transmis et affiché sur tout appareil de communication à distance à disposition de l'utilisateur ou d'un service de maintenance.

Préalablement à l'étape a), le procédé peut en outre comprendre une étape aa) d'estimation de la mise en position du balai d'essuie-glace 14 en position de maintenance, c'est-à-dire ici de la mise en position, comme illustré à la figure 2, du porte-balai 16 associé en position de maintenance.

On comprendra toutefois que la mise en position de maintenance n'implique pas nécessairement ni une opération de mise en place d'un nouveau balai, ni qu'un nouveau balai mis en place soit un balai neuf. En effet, par exemple, la mise en position de maintenance peut avoir été suivie d'une simple opération de nettoyage de la surface d'essuyage, de sorte que l'étape a) est nécessaire pour confirmer le remplacement du balai d'essuie-glace par un nouveau balai d'essuie-glace 14.

A titre d'exemple non limitatif, l'étape aa) d'estimation de la mise en position du balai d'essuie-glace 14 en position de maintenance comprend les sous-étapes suivantes :
- mesurer ou estimer au moins un paramètre pour la détermination de la position de maintenance ou de service ;
- comparer la valeur mesurée ou estimée dudit paramètre avec une valeur de référence ou une plage de valeurs de référence ; et
- déterminer, à partir des résultats de la comparaison, si le porte-balai est en position de maintenance ou de service.

Le paramètre est par exemple choisi parmi la consommation de puissance d'au moins un moteur 20 d'entraînement en balayage alterné du porte-balai 16, le couple de sortie du moteur d'entrainement 20, le couple de frottement du balai d'essuie-glace 14 sur la vitre 12 et le coefficient de friction du balai d'essuie-glace sur la vitre 12.

L'étape b) est par exemple une étape de mesure de la consommation de puissance ou du couple de sortie d'au moins un moteur 20 en fonctionnement. En variante, l'étape b) est une étape de mesure du couple de frottement du balai d'essuie-glace 14 sur la vitre 12 ou du coefficient de friction du balai d'essuie-glace 14 sur la vitre 12.

L'étape b) est par exemple mise en œuvre dès la première utilisation ou le premier fonctionnement du système 10 d'essuyage après que l'étape a) ait déterminé que le balai d'essuie-glace a effectivement été remplacé par un nouveau balai d'essuie-glace 14.

L'étape c) comprend par exemple successivement :
- une sous étape i) d'enregistrement d'un paramètre représentatif de l'état d'usure du nouveau balai d'essuie-glace 14 à un instant t0, mesuré à l'étape b) ; et
- une sous étape ii) de mesure ou de calcul et d'enregistrement dudit paramètre à un instant t, postérieur à t0, cette sous étape ii) étant répétée plusieurs fois.

Le paramètre représentatif de l'état d'usure du nouveau balai d'essuie-glace 14 est par exemple choisi parmi la consommation de puissance d'au moins un moteur 20 d'entraînement en balayage alterné du porte-balai 16, le couple de sortie du moteur d'entrainement 20, le couple de frottement du balai d'essuie-glace 14 sur le pare-brise 12 et le coefficient de friction du balai d'essuie-glace 14 sur le pare-brise 12.

La sous étape ii) intervient par exemple à chaque cycle de balayage de la vitre 12 par ledit balai d'essuie-glace 14. On entend par « cycle de balayage » le cycle de fonctionnement du système 10 au cours duquel le système 10 est démarré ou mis en fonctionnement, le balai d'essuie-glace 14 procède à plusieurs battements pour essuyer la vitre 12 puis le système 10 est arrêté. Le système 10 peut être mis en fonctionnement manuellement ou par l'intermédiaire des capteurs de pluie 28.

Le paramètre représentatif de l'état d'usure du nouveau balai d'essuie-glace 14 est par exemple enregistré aux sous-étapes i) et ii) dans la mémoire de données de l'unité 26 de pilotage et de contrôle.

Le paramètre représentatif de l'état d'usure du nouveau balai d'essuie-glace 14 est par exemple calculé à la sous étape ii) en calculant la moyenne de plusieurs mesures dudit paramètre réalisées pendant le cycle de balayage. La moyenne est par exemple réalisée sur 10 à 20 battements du balai d'essuie-glace 14, notamment sur 10 à 20 battements du balai d'essuie-glace 14 présentant entre eux une différence de coefficient de friction de 10 à 20% maximum. Le coefficient de friction peut varier du simple au double.

Les mesures du paramètre qui sont utilisées pour le calcul de la moyenne excluent par exemple certaines mesures réalisées au début et à la fin du cycle de fonctionnement. On évite ainsi de prendre en compte les mesures réalisées lors du démarrage du système 10, c'est-à-dire lorsqu'il y a trop d'eau sur la vitre 12 et en fin de pluie, lorsque la vitre 12 est trop sèche. Cela permet donc d'obtenir une valeur moyennée du paramètre sur une période de temps où la quantité d'eau sur la vitre 12 est sensiblement constante.

Le procédé peut en outre comprendre une étape e), qui suit l'étape d), d'émission d'un signal d'avertissement en particulier à destination d'un utilisateur du véhicule et/ou d'une personne chargée de la maintenance du balai d'essuie-glace. Le signal d'avertissement est par exemple un signal d'information en vue du remplacement du nouveau balai d'essuie-glace 14 usagé par un autre nouveau balai.

Le signal d'avertissement peut par exemple être affiché sur l'interface utilisateur. Le signal d'avertissement est par exemple affiché sur ladite interface utilisateur lors du démarrage du véhicule.

L'affichage et/ou la transmission du signal d'avertissement peuvent être réitérés régulièrement, par exemple sur une base régulière, jusqu'à ce le procédé détermine qu'un remplacement des balais d'essuie-glace a été effectué, notamment par mise en œuvre de l'étape a) du procédé.

Le signal d'avertissement peut aussi être transmis et affiché sur tout appareil de communication à distance à disposition de l'utilisateur ou d'un service de maintenance.

Le signal d'avertissement peut aussi comporter des informations techniques et commerciales complémentaires relatives notamment au modèle, type et référence de balai d'essuie-glace neuf à utiliser, notamment dans la mesure où le procédé 100 prévoit l'utilisation de valeur(s) de seuil(s) directement liée(s) au modèle, type et référence de balai d'essuie-glace neuf préconisé pour son montage sur le véhicule.

## Revendications

1. Procédé (100) de suivi de l'évolution de l'état d'usure d'un balai d'essuie-glace (14) d'un système (10) d'essuyage d'une vitre (12) de véhicule automobile, en vue de procéder au remplacement de ce balai d'essuie-glace au-delà d'un seuil (S) déterminé d'usure, le procédé comportant successivement :
- une étape a) de détermination du remplacement du balai d'essuie-glace par un nouveau balai d'essuie-glace (14) ;
- une étape b) d'estimation ou de mesure de l'état d'usure du nouveau balai d'essuie-glace (14) à un instant t0 ;
- une étape c) de suivi de l'évolution au cours du temps de l'état d'usure du nouveau balai d'essuie-glace (14) à partir de l'instant t0 ; et
- une étape d) de détection lorsque l'état d'usure du nouveau balai d'essuie-glace (14) atteint ou dépasse ledit seuil (S),
dans lequel l'étape a) de détermination du remplacement du balai d'essuie-glace par un nouveau balai d'essuie-glace (14) est une étape d'émission d'un message d'interrogation à destination d'un utilisateur du véhicule et/ou d'une personne chargée de la maintenance du balai d'essuie-glace, le procédé étant **caractérisé en ce que** ledit message est un message demandant à l'utilisateur du véhicule et/ou à la personne chargée de la maintenance du balai d'essuie-glace s'il a procédé au remplacement du balai d'essuie- glace par un nouveau balai d'essuie-glace neuf.

2. Procédé (100) selon la revendication 1, dans lequel l'étape d) est suivie d'une étape e) d'émission d'un signal d'avertissement en particulier à destination d'un utilisateur du véhicule et/ou d'une personne chargée de la maintenance du balai d'essuie-glace (14).

3. Procédé (100) selon la revendication 2, dans lequel ledit signal d'avertissement est un signal d'information en vue du remplacement du nouveau balai d'essuie-glace (14) usagé par un autre nouveau balai.

4. Procédé (100) selon l'une des revendications 1 à 3, dans lequel ledit système comportant au moins un moteur (20) d'entraînement en balayage alterné d'un support du balai d'essuie-glace, l'étape b) étant une étape de mesure de la consommation de puissance ou du couple de sortie dudit au moins un moteur en fonctionnement.

5. Procédé (100) selon l'une des revendications 1 à 3, dans lequel l'étape b) est une étape de mesure du couple de frottement du balai d'essuie-glace (14) sur la vitre (12) ou du coefficient de friction du balai d'essuie-glace (14) sur la vitre (12).

6. Procédé (100) selon l'une des revendications 1 à 5, dans lequel l'étape c) comprend successivement :
- une sous étape i) d'enregistrement d'un paramètre représentatif de l'état d'usure du nouveau balai d'essuie-glace (14) à un instant t0, mesuré à l'étape b) ; et
- une sous étape ii) de mesure ou de calcul et d'enregistrement dudit paramètre à un instant t, postérieur à t0, cette sous étape ii) étant répétée plusieurs fois.

7. Procédé (100) selon la revendication 6, dans lequel ladite sous étape ii) intervient à chaque cycle de balayage de la vitre (12) par ledit balai d'essuie-glace (14).

8. Procédé (100) selon la revendication 7, dans lequel ledit paramètre est calculé à la sous étape ii) en calculant la moyenne de plusieurs mesures du paramètre réalisées pendant le cycle de balayage.

9. Procédé (100) selon la revendication 8, dans lequel les mesures du paramètre utilisées pour le calcul de la moyenne excluent certaines mesures réalisées au début et à la fin du cycle de fonctionnement.

10. Système (10) d'essuyage d'une vitre (12) de véhicule automobile comportant :
- au moins un balai d'essuie-glace (14) ;
- au moins un moteur (20) d'entraînement en balayage alterné d'un support du balai (16) ;
ledit système étant **caractérisé en ce qu'**il comporte:
- des moyens (26) de détermination du remplacement du balai d'essuie-glace par un nouveau balai d'essuie-glace ;
- des moyens (26) d'estimation ou de mesure de l'état d'usure du nouveau balai d'essuie-glace à un instant t0 ;
- des moyens (26) de suivi de l'évolution au cours du temps de l'état d'usure du nouveau balai d'essuie-glace à partir de l'instant t0 ; et
- des moyens (26) de détection lorsque l'état d'usure du nouveau balai d'essuie-glace atteint ou dépasse un seuil (S) déterminé d'usure,
ledit système (10) étant configuré pour mettre en œuvre le procédé de l'une quelconque des revendications 1 à 9.

## Patentansprüche

1. Verfahren (100) zur Verfolgung der Entwicklung des Verschleißzustands eines Scheibenwischerblatts (14) eines Wischersystems (10) einer Kraftfahrzeugscheibe (12), um dieses Scheibenwischerblatt jenseits einer bestimmten Verschleißschwelle (S) zu ersetzen, wobei das Verfahren nacheinander aufweist:
- einen Schritt a) der Bestimmung des Ersetzens des Scheibenwischerblatts durch ein neues Scheibenwischerblatt (14);
- einen Schritt b) der Schätzung oder der Messung des Verschleißzustands des neuen Scheibenwischerblatts (14) zu einem Zeitpunkt t0;
- einen Schritt c) der Verfolgung der zeitlichen Entwicklung des Verschleißzustands des neuen Scheibenwischerblatts (14) ausgehend vom Zeitpunkt t0; und
- einen Schritt d) der Erfassung, wenn der Verschleißzustand des neuen Scheibenwischerblatts (14) die Schwelle (S) erreicht oder überschreitet,
wobei der Schritt a) der Bestimmung des Ersetzens des Scheibenwischerblatts durch ein neues Scheibenwischerblatt (14) ein Schritt des Sendens einer Befragungsnachricht an einen Benutzer des Fahrzeugs und/oder eine mit der Wartung des Scheibenwischerblatts beauftragte Person ist, wobei das Verfahren **dadurch gekennzeichnet ist, dass** die Nachricht eine Nachricht ist, die den Benutzer des Fahrzeugs und/oder die mit der Wartung des Scheibenwischerblatts beauftragte Person fragt, ob sie das Ersetzen des Scheibenwischerblatts durch ein anderes neues Scheibenwischerblatt durchgeführt hat.

2. Verfahren (100) nach Anspruch 1, wobei auf den Schritt d) ein Schritt e) des Sendens eines Warnsignals insbesondere an einen Benutzer des Fahrzeugs und/oder an eine mit der Wartung des Scheibenwischerblatts (14) beauftragte Person folgt.

3. Verfahren (100) nach Anspruch 2, wobei das Warnsignal ein Informationssignal zum Ersetzen des abgenutzten neuen Scheibenwischerblatts (14) durch ein anderes neues Blatt ist.

4. Verfahren (100) nach einem der Ansprüche 1 bis 3, wobei das System mindestens einen Motor (20) zum abwechselnden Wischantrieb eines Trägers des Scheibenwischerblatts aufweist, wobei der Schritt b) ein Schritt des Messens des Leistungsverbrauchs oder des Ausgangsmoments des mindestens einen Motors im Betrieb ist.

5. Verfahren (100) nach einem der Ansprüche 1 bis 3, wobei der Schritt b) ein Schritt der Messung des Reibungsmoments des Scheibenwischerblatts (14) auf der Scheibe (12) oder des Reibungskoeffizienten des Scheibenwischerblatts (14) auf der Scheibe (12) ist.

6. Verfahren (100) nach einem der Ansprüche 1 bis 5, wobei der Schritt c) nacheinander enthält:
- einen Teilschritt i) des Speicherns eines für den Verschleißzustand des neuen Scheibenwischerblatts (14) zu einem Zeitpunkt t0 repräsentativen Parameters, gemessen im Schritt b); und
- einen Teilschritt ii) des Messens oder Berechnens und des Speicherns des Parameters zu einem Zeitpunkt t nach t0, wobei dieser Teilschritt ii) mehrfach wiederholt wird.

7. Verfahren (100) nach einem der Ansprüche 6, wobei der Teilschritt ii) in jedem Wischzyklus der Scheibe (12) durch das Scheibenwischerblatt (14) stattfindet.

8. Verfahren (100) nach Anspruch 7, wobei der Parameter im Teilschritt ii) berechnet wird, indem der Mittelwert mehrerer Messungen des Parameters berechnet wird, die während des Wischzyklus durchgeführt werden.

9. Verfahren (100) nach Anspruch 8, wobei die für die Berechnung des Mittelwerts verwendeten Messungen des Parameters bestimmte Messungen ausschließen, die zu Beginn und am Ende des Betriebszyklus durchgeführt werden.

10. System (10) zum Wischen einer Scheibe (12) eines Kraftfahrzeugs, das aufweist:
- mindestens ein Scheibenwischerblatt (14);
- mindestens einen Motor (20) zum abwechselnden Wischantrieb eines Trägers des Blatts (16);
wobei das System **dadurch gekennzeichnet ist, dass** es aufweist:
- Einrichtungen (26) zur Bestimmung des Ersetzens des Scheibenwischerblatts durch ein neues Scheibenwischerblatt;
- Einrichtungen (26) zur Schätzung oder Messung des Verschleißzustands des neuen Scheibenwischerblatts zu einem Zeitpunkt t0;
- Einrichtungen (26) zur Verfolgung der zeitlichen Entwicklung des Verschleißzustands des neuen Scheibenwischerblatts ausgehend vom Zeitpunkt t0; und
- Einrichtungen (26) zur Erfassung, wenn der Verschleißzustand des neuen Scheibenwischerblatts eine bestimmte Verschleißschwelle (S) erreicht oder überschreitet,
wobei das System (10) konfiguriert ist, das Verfahren eines der Ansprüche 1 bis 9 durchzuführen.

## Claims

1. Method (100) for monitoring the change in the state of wear of a windscreen wiper (14) of a wiping system (10) for a motor vehicle window (12), in order to replace this windscreen wiper after a given wear threshold (S), the method comprising, in succession:
- a step a) of determining the replacement of the windscreen wiper with a new windscreen wiper (14);
- a step b) of estimating or measuring the state of wear of the new windscreen wiper (14) at a time t0;
- a step c) of monitoring the change over time in the state of wear of the new windscreen wiper (14) starting from the time t0; and
- a step d) of detecting when the state of wear of the new windscreen wiper (14) reaches or passes said threshold (S),
wherein step a) of determining the replacement of the windscreen wiper with a new windscreen wiper (14) is a step of outputting an interrogation message to a user of the vehicle and/or a person responsible for the maintenance of the windscreen wiper, the method being **characterized in that** said message is a message asking the user of the vehicle and/or the person responsible for the maintenance of the windscreen wiper if they have replaced the windscreen wiper with another new windscreen wiper.

2. Method (100) according to Claim 1, wherein step d) is followed by a step e) of outputting a warning signal in particular to a user of the vehicle and/or a person responsible for the maintenance of the windscreen wiper (14) .

3. Method (100) according to Claim 2, wherein said warning signal is an information signal about replacing the worn new windscreen wiper (14) with another new wiper.

4. Method (100) according to one of Claims 1 to 3, wherein said system has at least one motor (20) for driving the back-and-forth sweep of a windscreen wiper holder, step b) being a step of measuring the power consumption or the output torque of said at least one motor in operation.

5. Method (100) according to one of Claims 1 to 3, wherein step b) is a step of measuring the friction torque of the windscreen wiper (14) on the window (12) or the coefficient of friction of the windscreen wiper (14) on the window (12).

6. Method (100) according to one of Claims 1 to 5, wherein step c) comprises, in succession:
- a sub-step i) of recording a parameter representative of the state of wear of the new windscreen wiper (14) at a time t0, measured in step b); and
- a sub-step ii) of measuring or calculating and recording said parameter at a time t, after t0, this sub-step ii) being repeated several times.

7. Method (100) according to Claim 6, wherein said sub-step ii) takes place in each cycle of said windscreen wiper (14) sweeping over the window (12).

8. Method (100) according to Claim 7, wherein said parameter is calculated in sub-step ii) by calculating the average of several measurements of the parameter that are taken during the sweeping cycle.

9. Method (100) according to Claim 8, wherein the measurements of the parameter that are used to calculate the average exclude certain measurements that are taken at the start and end of the operating cycle.

10. Wiping system (10) for a motor vehicle window (12), having:
- at least one windscreen wiper (14);
- at least one motor (20) for driving the back-and-forth sweep of a windscreen wiper holder (16);
said system being **characterized in that** it has:
- means (26) for determining the replacement of the windscreen wiper with a new windscreen wiper;
- means (26) for estimating or measuring the state of wear of the new windscreen wiper at a time t0;
- means (26) for monitoring the change over time in the state of wear of the new windscreen wiper starting from the time t0; and
- means (26) for detecting when the state of wear of the new windscreen wiper reaches or passes a given wear threshold (S),
said system (10) being configured to implement the method of any one of Claims 1 to 9.
